# EUROPEAN PATENT SPECIFICATION

(11) **EP 3 150 489 B1**
(45) Date of publication and mention of the grant of the patent: **16.06.2021**
(21) Application number: 16190182.2
(22) Date of filing: 22.09.2016
(51) Int. Cl.: B64C 27/00

(54) **UNIFIED CONTROL OF MULTIPLE ACTIVE SYSTEMS FOR HELICOPTER VIBRATION SUPRESSION**
VEREINHEITLICHTE STEUERUNG VON MEHREREN AKTIVEN SYSTEMEN ZUR UNTERDRÜCKUNG VON HUBSCHRAUBERSCHWINGUNGEN
COMMANDE UNIFIÉE DE MULTIPLES SYSTÈMES ACTIFS DE SUPPRESSION DES VIBRATIONS D'UN HÉLICOPTÈRE

(30) Priority: 30.09.2015 US 201514871615
(43) Date of publication of application: 05.04.2017
(73) Proprietor: Bell Helicopter Textron Inc., Fort Worth, TX 76101 (US)
(72) Inventor: HEVERLY, David E., Arlington, TX Texas 76012 (US); SINGH, Rupinder, Houston, TX Texas 77019 (US); LEE, Taeoh, Keller, TX Texas 76248 (US); SMITH, Michael, Colleyville, TX Texas 76034 (US)
(74) Representative: Barker Brettell LLP

(56) References cited:
- WO-A1-2010/099521
- WO-A1-2015/051057
- WO-A2-2014/168664
- US-A1- 2010 034 655
- US-A1- 2012 292 434

## Description

### BACKGROUND

### Field of the Invention

The present application relates vibration control systems. In particular, the present application relates to vibration control systems for a cockpit and/or cabin of a rotorcraft.

### Description of Related Art

Some rotorcraft comprise vibration control systems associated with controlling vibrations emanating from rotor systems, engines, and/or other sources of vibration. In some cases, the vibration control systems attenuate vibration by controlling the source of the vibration while in other cases vibration is attenuated by providing actuators configured to move a mass in a manner that counteracts the undesirable vibrations. In some cases where a rotorcraft is provided with multiple independent vibration control systems, the vibrations control systems are each independently controlled. Significant room for improvement on vibration control systems remains.

US 2012/092434 discloses a vibration suppression system for a rotorcraft having an airframe, a main gear box, a rotor, a hub, and a rotor head. The system comprises a hub mounted vibration suppressor (HMVS) mounted on the rotor head to reduce in-plane loads that the rotor exerts on the hub and a plurality of active vibration control (AVC) actuators grouped in an overhead of the airframe beneath and proximate to the main gear box, to reduce residual load.

In WO2010099521, there is disclosed a system and method for vibration control in a rotorcraft using an adaptive reference model algorithm. The adaptive reference model algorithm uses a gain scheduling feature combined with a customized least-squares routine as an adaptive method for adjusting feedback control so as to account for variations in a transfer function. The dynamic relationship between active vibration control (AVC) actuators and AVC sensors is represented by a mathematical model of the transfer Function. The model is continuously updated by the least-squares routine. A feedback gain is computed from the model, and the feedback gain is updated each time the model of the transfer function is updated.

In WO2014168664, an AVC system includes one or more sensors, one or more actuators, and a controller adapted to receive real-time aircraft information and adjust at least one control parameter. In some aspects, a method of controlling vibration within an aircraft includes receiving vibration information from at least one sensor, receiving real-time aircraft information from an avionics system, adjusting at least one control parameter used in a control algorithm, and generating a force command.

### DESCRIPTION OF THE DRAWINGS

The novel features believed characteristic of the application are set forth in the appended claims. However, the application itself, as well as a preferred mode of use, and further objectives and advantages thereof, will best be understood by reference to the following detailed description when read in conjunction with the accompanying drawings, wherein:
Figure 1 is an orthogonal side view of a rotorcraft according to the present application.
Figure 2 is a schematic view of a vibration control system of the rotorcraft of Figure 1.
Figure 3 is a simplified representation of a general-purpose processor (e.g. electronic controller or computer) system suitable for implementing the embodiments of the disclosure.
Figure 4 is a flowchart of a method of operating the vibration control system of Figures 1 and 2.
Figure 5 is a schematic diagram of an alternative embodiment of a vibration control system.

While the system and method of the present application is susceptible to various modifications and alternative forms, specific embodiments thereof have been shown by way of example in the drawings and are herein described in detail. It should be understood, however, that the description herein of specific embodiments is not intended to limit the application to the particular embodiment disclosed, but on the contrary, the intention is to cover all modifications falling within the scope of the present application as defined by the appended claims.

### DETAILED DESCRIPTION

Illustrative embodiments of the preferred embodiment are described below. In the interest of clarity, not all features of an actual implementation are described in this specification. It will of course be appreciated that in the development of any such actual embodiment, numerous implementation-specific decisions must be made to achieve the developer's specific goals, such as compliance with system-related and business-related constraints, which will vary from one implementation to another. Moreover, it will be appreciated that such a development effort might be complex and time-consuming but would nevertheless be a routine undertaking for those of ordinary skill in the art having the benefit of this disclosure.

In the specification, reference may be made to the spatial relationships between various components and to the spatial orientation of various aspects of components as the devices are depicted in the attached drawings. However, as will be recognized by those skilled in the art after a complete reading of the present application, the devices, members, apparatuses, etc. described herein may be positioned in any desired orientation. Thus, the use of terms to describe a spatial relationship between various components or to describe the spatial orientation of aspects of such components should be understood to describe a relative relationship between the components or a spatial orientation of aspects of such components, respectively, as the device described herein may be oriented in any desired direction.

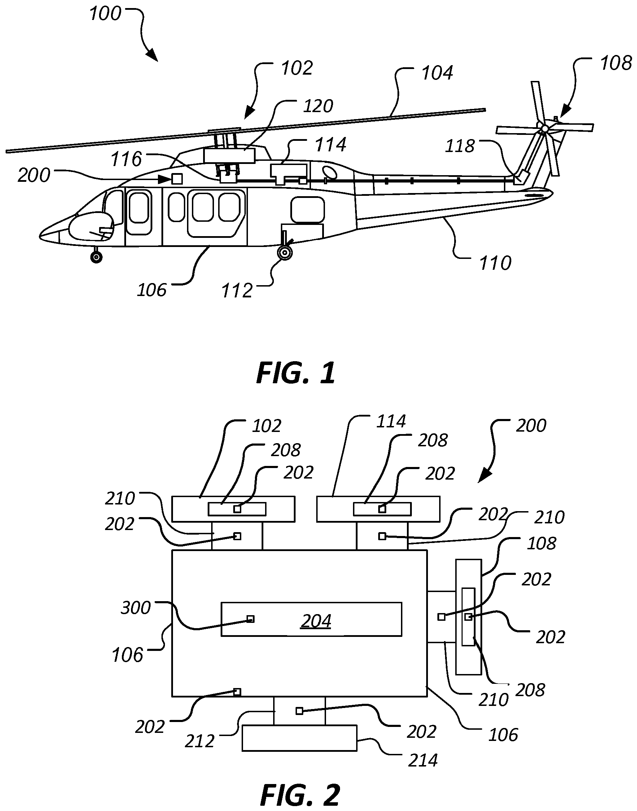

Referring now to Figure 1 in the drawings, a rotorcraft 100 is illustrated. Rotorcraft 100 comprises a rotor system 102 comprising a plurality of rotor blades 104. A pitch of each rotor blade 104 can be controlled in order to selectively control direction, thrust, and lift of the rotorcraft 100. Rotorcraft 100 further comprises a fuselage 106, anti-torque system 108, and an empennage 110. Rotorcraft 100 further comprises a landing gear system 112 to provide ground support for the aircraft. Rotorcraft 100 further comprises at least one engine 114 configured to drive a main rotor gearbox 116 and a tail rotor intermediate gearbox 118. The rotorcraft 100 further comprises a pylon mount system 120 configured to generally secure the rotor system 102 to the fuselage 106.

Rotorcraft 100 further comprises a vibration control system (VCS) 200 configured to sense vibrations attributable to the rotor system 102, anti-torque system 108, and other sources of vibration that can be transmitted to a cockpit and/or cabin of the fuselage 106. Most generally, the vibration control system 200 is configured to monitor and contribute to control of at least one of the sources of vibration. The vibration control system 200 comprises actuators configured to selectively cause vibrations in vector directions selected to counter and/or attenuate vibrations emanating from a vibration source external to the vibration control system 200. It should be appreciated that even though aircraft are particularly well suited to implement the embodiments of the present disclosure, non-aircraft vehicles and devices can also implement the embodiments.

Referring now to Figure 2 , a simplified schematic view of the VCS 200 is shown. The VCS 200 comprises a plurality of sensors 202, such as, but not limited to, accelerometers and/or strain gauges, configured to sense vibration and provide vibration related information to a controller 204. The VCS 200 further comprises a plurality of intermediate actuators 210 and integrated actuators 208. In some embodiments, integrated actuators 208 can comprise physical actuators, control laws, physical feedback systems, and/or any other system and/or device configured to reduce, attenuate, and/or counter the generation of vibrations. Intermediate actuators 210 comprise one or more of an active pylon mounts (P-LIVE)In some embodiments, physical actuators can comprise one or more of trailing edge flaps on each rotor blade, active twist of each rotor blade, Individual Blade Control (IBC), Higher Harmonic Control (HHC) via the swashplate, and/or an active force generator mounted to a rotor hub. In some embodiments, integrated actuators 208 can affect each rotor blade individually, affect all rotor blades simultaneously (i.e. at swashplate), or the integrated actuators 208 could affect the rotor hub.

In the embodiment shown, integrated actuators 208 are provided and integrated into control of operation of the rotor system 102, the anti-torque system 108, and the engine 114. In some embodiments, intermediate actuators 210 can comprise physical actuators, control laws, physical feedback systems, and/or any other system and/or device configured to counter the transmission of generated vibrations from a source of vibrations to the a cockpit and/or cabin of the fuselage 106. The VCS 200 further comprises a dedicated actuator 212 comprising a force generation device that attached to the fuselage structure. The dedicated actuator 212 is configured to move a mass 214 by linearly translating the mass 214 and/or rotating the mass 214 about a center point.

The dedicated actuator is connected to the cockpit and/or cabin of the fuselage 106 and contains a mass 214 that is movable relative to the fuselage 106. In some embodiments, the combination of the dedicated actuator 212 and the mass 214 can comprise a so-called seismic or inertial force generator. Each of the sensors 202 can communicate with a general-purpose processor system 300 of the controller 204 which is described in greater detail below. Most generally, the VCS 200 is configured to reduce vibrations transmitted to the fuselage 106 and/or to minimize audible noise within a cockpit and/or cabin of the fuselage 106. The controller 204 is configured to receive information from the vibration and noise sensors 202 and control operation of the integrated actuators 208, intermediate actuators 210, and dedicated actuator 212. In this embodiment, the controller 204 is provided with a transfer function relationship of all actively controlled actuation devices which ensures system stability and optimizes vibration suppression. In a case where an aircraft with integrated actuators, intermediate actuators, and dedicated actuators, each type of actuator having its own independent controller trying to independently control the same vibrations, it is possible that the independent control systems have an interdependent influence on each other such they are in conflict with one another. When a conflict between the independent control systems does exist, it is possible that vibrations and/or noise are increased rather than decreased by simultaneous operation of the multiple independent control systems because the independent control systems have no knowledge of the interdependent influences. Accordingly, the generated control commands to the independent control systems actuators may not be optimal, can lead to increased vibrations, can produce limit cycle oscillations, and can possibly be unstable and lead to divergent vibrations. The controller 204 can comprise and/or utilize information regarding the interdependent influence between the various actuators so that the controller 204 can overcome the deficiencies of systems comprising the same actuators controlled by separate controllers. The controller 204 provides effective and efficient vibration reduction while additionally producing an optimal set of control commands that minimizes power and/or energy required to control the various actuators of the VCS 200. In alternative embodiments, multiple controllers can be provided that communicate with each other and share the requisite information necessary to emulate a single unified controller 204.

The VCS 200 is operated to measure vibrations, process the sensor measurements, and output control commands. The VCS 200 may further comprise an amplifier to produce electrical actuator drive signals to cause force generating actuators to produce force inputs to the rotorcraft fuselage 106, to a pylon 120 to fuselage 106 interface, and/or to alter the aerodynamic forces of rotor blades 104. In some cases, vibration reduction can be accomplished by superposition of the vibrations created by the actuators forces and the vibrations generated by the sources of vibration, such as the main rotor system 102. In some cases, effective vibration reduction is dependent upon the amplitude, phasing, and frequency of the forces generated by the actuators. The controller 204 receives frequency and/or phase information from a tachometer associated with the main rotor system 102. The controller 204 can be provided with information regarding the magnitude and phase relationship between the sensors 202 and actuators 208, 210, 212 and the information can be provided in the form of a transfer function. In some cases, the transfer function can be frequency dependent, airframe design dependent, and can be time-varying through the rotorcraft 100 flight. Further, the transfer function can change as a result of RPM changes, fuel consumption, cargo changes, rotorcraft aging, and/or manufacturing differences between rotorcraft.

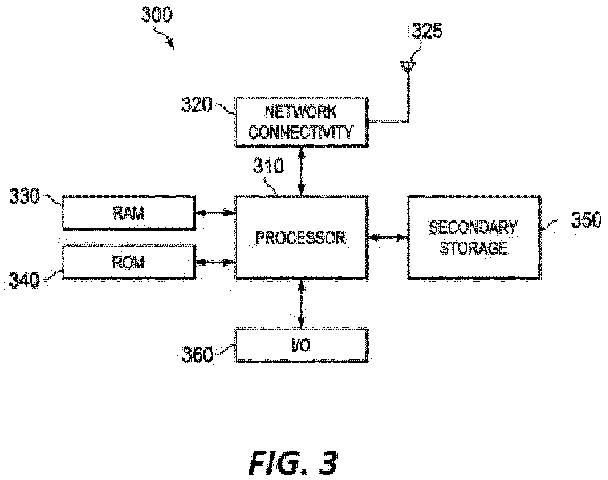

Figure 3 illustrates a typical, general-purpose processor (e.g., electronic controller or computer) system 300 that includes a processing component 310 suitable for implementing one or more embodiments disclosed herein. In particular, the aircraft 100 may comprise one or more systems 300. In addition to the processor 310 (which may be referred to as a central processor unit or CPU), the system 300 might include network connectivity devices 320, random access memory (RAM) 330, read only memory (ROM) 340, secondary storage 350, and input/output (I/O) devices 360. In some cases, some of these components may not be present or may be combined in various combinations with one another or with other components not shown. These components might be located in a single physical entity or in more than one physical entity. Any actions described herein as being taken by the processor 310 might be taken by the processor 310 alone or by the processor 310 in conjunction with one or more components shown or not shown in the drawing. It will be appreciated that the data described herein can be stored in memory and/or in one or more databases.

The processor 310 executes instructions, codes, computer programs, or scripts that it might access from the network connectivity devices 320, RAM 330, ROM 340, or secondary storage 350 (which might include various disk-based systems such as hard disk, floppy disk, optical disk, or other drive). While only one processor 310 is shown, multiple processors may be present. Thus, while instructions may be discussed as being executed by a processor, the instructions may be executed simultaneously, serially, or otherwise by one or multiple processors. The processor 310 may be implemented as one or more CPU chips.

The network connectivity devices 320 may take the form of modems, modem banks, Ethernet devices, universal serial bus (USB) interface devices, serial interfaces, controller area network (CAN) bus interface devices, token ring devices, fiber distributed data interface (FDDI) devices, wireless local area network (WLAN) devices, radio transceiver devices such as code division multiple access (CDMA) devices, global system for mobile communications (GSM) radio transceiver devices, worldwide interoperability for microwave access (WiMAX) devices, and/or other well-known devices for connecting to networks. These network connectivity devices 320 may enable the processor 310 to communicate with the Internet or one or more telecommunications networks or other networks from which the processor 310 might receive information or to which the processor 310 might output information.

The network connectivity devices 320 might also include one or more transceiver components 325 capable of transmitting and/or receiving data wirelessly in the form of electromagnetic waves, such as radio frequency signals or microwave frequency signals. Alternatively, the data may propagate in or on the surface of electrical conductors, in coaxial cables, in waveguides, in optical media such as optical fiber, or in other media. The transceiver component 325 might include separate receiving and transmitting units or a single transceiver. Information transmitted or received by the transceiver 325 may include data that has been processed by the processor 310 or instructions that are to be executed by processor 310. Such information may be received from and outputted to a network in the form, for example, of a computer data baseband signal or signal embodied in a carrier wave. The data may be ordered according to different sequences as may be desirable for either processing or generating the data or transmitting or receiving the data. The baseband signal, the signal embedded in the carrier wave, or other types of signals currently used or hereafter developed may be referred to as the transmission medium and may be generated according to several methods well known to one skilled in the art.

The RAM 330 might be used to store volatile data and perhaps to store instructions that are executed by the processor 310. The ROM 340 is a non-volatile memory device that typically has a smaller memory capacity than the memory capacity of the secondary storage 350. ROM 340 might be used to store instructions and perhaps data that are read during execution of the instructions. Access to both RAM 330 and ROM 340 is typically faster than to secondary storage 350. The secondary storage 350 is typically comprised of one or more disk drives, tape drives, or solid-state drives and might be used for non-volatile storage of data or as an over-flow data storage device if RAM 330 is not large enough to hold all working data. Secondary storage 350 may be used to store programs or instructions that are loaded into RAM 330 when such programs are selected for execution or information is needed.

The I/O devices 360 may include liquid crystal displays (LCDs), touch screen displays, keyboards, keypads, switches, dials, mice, track balls, voice recognizers, card readers, paper tape readers, printers, video monitors, transducers, sensors, or other well-known input or output devices. Also, the transceiver 325 might be considered to be a component of the I/O devices 360 instead of or in addition to being a component of the network connectivity devices 320. Some or all of the I/O devices 360 may be substantially similar to various components disclosed herein.

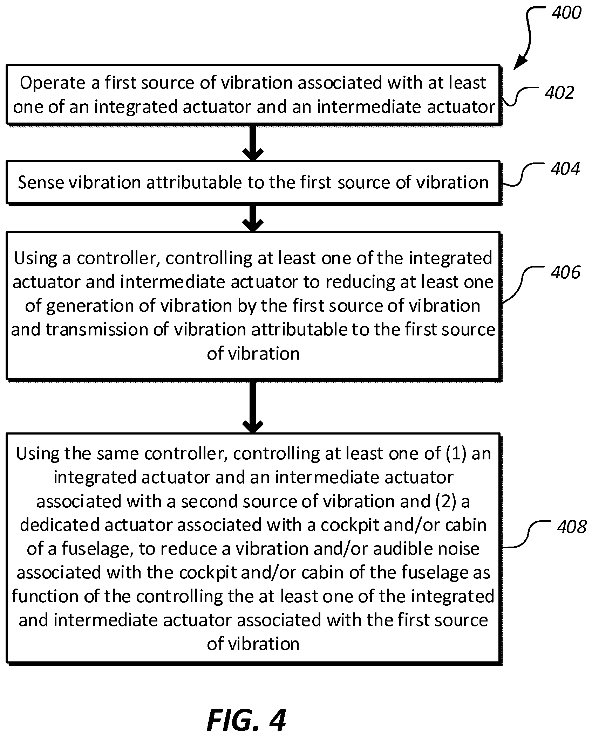

Referring now to Figure 4 , a flowchart of a method 400 of operating the VCS 200 is shown. The method 400 can begin at block 402 by operating a first source of vibration, being a rotor system 102. Vibrations will normally be generated by operating the first source of vibration. The method 400 can continue at block 404 by sensing the vibrations generated by the first source of vibration using sensors, such as, but not limited to, one or more sensors 202. The method 400 can continue at block 406 by using a controller to utilize the sensed information regarding vibrations from the first source of vibration to control at least one of an integrated actuator and intermediate actuator associated with the first source of vibration to reduce at least one of the generation of vibration by the first source (using an integrated actuator) and the transmission of vibration attributable to the first source of vibration (using an intermediate actuator). In some embodiments, the above-described controlling can be accomplished utilizing a controller, such as, but not limited to, controller 204. In some embodiments, the method 400 can continue at block 408 by operating the same controller utilized to control, as a function of the sensing and/or controlling associated with the first source of vibration, at least one of an integrated actuator associated with a second source of vibration, an intermediate actuator associated with the second source of vibration, and a dedicated actuator associated with a cockpit and/or cabin of a fuselage to reduce a vibration and/or audible noise associated with the cockpit and/or cabin of the fuselage.

In other words, the method 400 can utilize a controller to control actuators associated with multiple sources of vibration while taking into consideration the operation of all actuators controlled by the controller. In some cases, the above-described unified control of the actuators can prevent actuators from engaging in actuations that generate directional forces that exacerbate and/or amplify undesirable vibrations. Further, the method 400 can allow unification of control over previously separately operated actuators so that actuation control is administered efficiently and without creating force fighting between actuators. Still further, the method 400 provides for operating a VCS, such as VCS 200, so that the vibration reduction accomplished by operating an actuator associated with a first source of vibration can be complemented by, as a function of the control of the actuator associated with the first source of vibration, additionally operating a dedicated actuator associated with a fuselage to reduce vibration and/or audible noise associated with a cockpit and/or cabin of the fuselage.

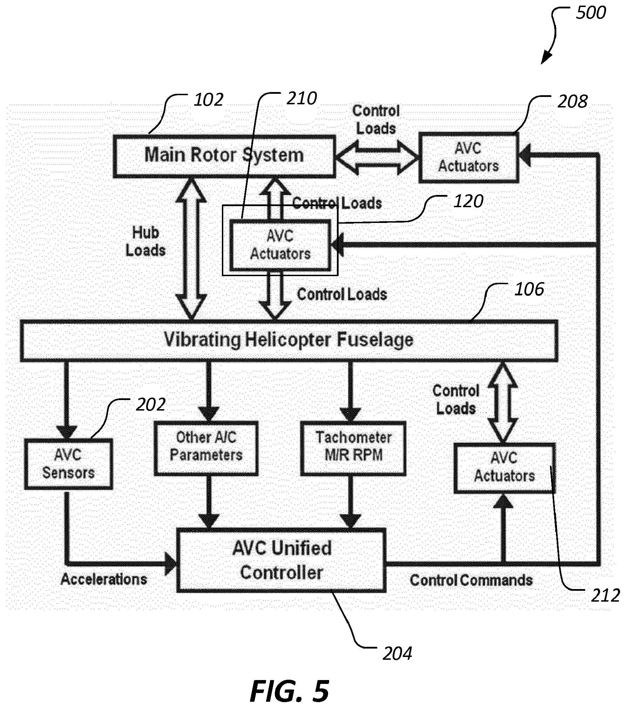

Referring now to Figure 5, a schematic representation of an alternative embodiment of a VCS is shown. The VCS 500 is substantially similar to VCS 200 and comprises sensors 202, integrated actuators 208, intermediate actuators 210, and dedicated actuators 212. In this embodiment feedback from sensors 202 is provided to the controller 204 and the controller 204 is configured to issue control commands to each of the integrated actuators 208, intermediate actuators 210, and dedicated actuators 212. In this embodiment, the integrated actuators 208 are associated with the main rotor system 102 and comprise components and/or control laws configured to affect operation of the main rotor system 102, such as, but not limited to, a torque applied to the main rotor system, a pitch of one or more rotor blades 104, trailing edge flap values, and/or any other suitable input selected to adjust control operation and/or a physical configuration of the main rotor system 102 in a manner selected to reduce vibration generated by the main rotor system. The main rotor system 102 is referred to as a first source of vibration. The main rotor system 102 is mechanically connected to the fuselage 106 via the pylon mounting system 120. As such, in some cases the vibrations produced by the main rotor system 102 can be transmitted to the fuselage 106 via the pylon mounting system 120. In this embodiment, the pylon mounting system 120 is associated with intermediate actuators 210. Intermediate actuators 210 can be disposed in a load path between the main rotor system 102 and the fuselage 106 so that selective operation of the intermediate actuators 210 can reduce transmission of vibratory forces between the main rotor system 102 and the fuselage 106.

In operation, the VCS 500 can reduce vibration and/or audible noise in a cockpit and/or cabin of the fuselage 106 by feeding information from sensors 202, information from a tachometer associated with the main rotor system 102, and other A/C parameters to the unified controller 204. Because the controller 204 is provided with a transfer function defining the relationships between the actuators 208, 210, 212, the controller 204 is utilized to calculate and issue appropriate control commands for each of the actuators 208, 210, 212. In some embodiments, the transfer functions can provide information defining a relationship between the vibration sensors and the actuators, as well as interdependent relationships between the various actuators. In some embodiments, the control commands to the actuators 208 comprise adjustments to rotor blade 104 operation, such as, but not limited to pitch adjustments. The control commands to the actuators 210 comprise control signals for generating force inputs to at least one of the main rotor system 102 and the fuselage 106. The control commands to the actuator 212 comprise control signals to an inertial force generator that moves a mass 214 relative to the fuselage 106. The control commands to the actuators 208, 210, 212 can comprise frequency, direction, phase, and/or amplitude information. One or more sensors 202 are disposed relative to a particular location of a fuselage, such as, but not limited to, a pilot seat to optimize vibration and/or audible noise reduction for the selected locations, such as selected locations within an aircraft fuselage.

The particular embodiments disclosed above are illustrative only and it is therefore evident that the particular embodiments disclosed above may be altered or modified, and all such variations are considered within the scope of the application, as defined by the appended claims.

## Claims

1. A helicopter (100), having a vibration control system (200), and comprising:
a fuselage (106);
a cabin;
a cockpit;
a main rotor system (102); and
a pylon mount connecting the main rotor system (102) to the fuselage;
the vibration control system (200) comprising:
a dedicated actuator (212), connected with the cockpit and/or the cabin of the fuselage (106), the dedicated actuator (212) comprising a mass (214) and an inertial force generator for moving the mass (214) relative to the fuselage (106) to thereby generate a linear or rotational force relative to the fuselage (106);
at least one of an integrated actuator (208) and an intermediate actuator (210), both controllably connected with a first source of vibration, the first source of vibration being the rotor system (102);
a plurality of sensors (202) configured to sense vibration and audible noise associated with at least one of the rotor system (102), the cabin and the cockpit;
a tachometer configured to provide a rotational frequency of the rotor system (102);
a controller (204) configured to receive information from the sensors (202) and the tachometer and, to provide unified control to the dedicated actuator (212), the integrated actuator (208), and the intermediate actuator (210) based on the information; and
wherein the integrated actuator (208) is configured to affect operation of the rotor system (102) based on at least one of the rotational frequency of the rotor system and the vibration from the rotor system (102), and;
wherein the intermediate actuator (201) is associated with the pylon mount to affect the vibration in a load path between the fuselage (106) and the rotor system (102);
wherein the controller (204) is further configured to send command signals to the dedicated actuator (212), the command signals comprising drive signals for the inertial force generator to move the mass (214) relative to the fuselage (106) to reduce vibration and audible noise associated with the cockpit and/or the cabin of the fuselage.

2. The helicopter (100) of claim 1, wherein the intermediate actuator (210) is disposed in the load path between the rotor system (102) and the fuselage (106).

3. A method, comprising:
operating a first source of vibration of a helicopter (100), the first source of vibration being the main rotor system (102);
sensing vibration and audible noise associated with at least one of the main rotor system (102), a cabin of the helicopter, and a cockpit of the helicopter;
operating a unified controller to receive the sensed vibration and audible noise and to reduce vibration and audible noise associated with the at least one of the main rotor system, the cabin, and the cockpit; and
providing a rotational frequency of the rotor system (102) to the unified controller (204) via a tachometer;
wherein operating the unified controller comprises controlling each of a dedicated actuator (212), an integrated actuator (208), and an intermediate actuator (210) to reduce vibration and audible noise;
wherein the dedicated actuator (212) is connected with the cockpit and/or the cabin of the fuselage (106), the dedicated actuator (212) comprising a mass (214) and an inertial force generator for moving the mass (214) relative to the fuselage (106) to thereby generate a linear or rotational force relative to the fuselage (106), and
wherein controlling the dedicated actuator comprises sending command signals to the dedicated actuator (212), the command signals comprising drive signals for the inertial force generator to move the mass relative to the fuselage (106) to reduce vibration and audible noise associated with the cockpit and/or the cabin of the fuselage (106);
and wherein the integrated actuator (208) and the intermediate actuator (210) are controllably connected with the first source of vibration, being the rotor system (102);
wherein controlling the integrated actuator (208) comprises affecting operation of the rotor system based on at least one of the rotational frequency of the rotor system and the vibration produced by the rotor system;
and
wherein controlling the intermediate actuator (210) comprises affecting vibration associated with a pylon mount in the load path connecting the fuselage (106) and the rotor system.

4. The method of claim 3, wherein a second source of vibration comprises an anti-torque system (108) of the helicopter.

5. The helicopter of claim 1, wherein the main rotor system (102) is a tilt rotor system.

6. The helicopter of claim 5, wherein at least one of the sensors of the vibration control system (200) comprises an accelerometer or a strain gauge.

7. The helicopter of claim 1, wherein the controller (204) is further configured to send command signals to the integrated actuator (208), the command signals comprising control signals to adjust one of:
a torque applied to the main rotor system;
a pitch of a rotor blade;
a trailing edge flap value; and
a swashplate.

8. The method of claim 3, further comprising:
sending command signals from the unified controller to each the integrated actuator (208) and the intermediate actuator (210), the command signals comprising controls signals to reduce vibration and audible noise associated with the cockpit and/or the cabin of the fuselage.

9. The method of claim 3, wherein controlling the intermediate actuator (210) comprises actively causing vibration to reduce transmission of vibratory forces between the rotor system (102) and the fuselage (106).

10. The method of claim 3, wherein controlling the integrated actuator (208) comprises actively causing vibration to reduce vibration associated with the rotor system (102).

## Patentansprüche

1. Hubschrauber (100), der ein Vibrationssteuerungssystem (200) aufweist und Folgendes umfasst:
einen Rumpf (106);
eine Kabine;
ein Cockpit;
ein Hauptrotorsystem (102); und
eine Pylonhalterung, die das Hauptrotorsystem (102) mit dem Rumpf verbindet;
wobei das Vibrationssteuerungssystem (200) umfasst:
einen dedizierten Aktuator (212), der mit dem Cockpit und/oder der Kabine des Rumpfes (106) verbunden ist, wobei der dedizierte Aktuator (212) eine Masse (214) und einen Trägheitskraftgenerator zum Bewegen der Masse (214) relativ zu dem Rumpf (106) umfasst, um dadurch eine lineare oder rotierende Kraft relativ zu dem Rumpf (106) zu erzeugen;
mindestens eines von einem integrierten Aktuator (208) und einem Zwischenaktuator (210), die beide steuerbar mit einer ersten Vibrationsquelle verbunden sind, wobei die erste Vibrationsquelle das Rotorsystem (102) ist;
eine Vielzahl von Sensoren (202), die konfiguriert sind, um Vibration und hörbare Geräusche erfassen, die mindestens einem von dem Rotorsystem (102), der Kabine und dem Cockpit zugeordnet sind;
einen Tachometer, der konfiguriert ist, um eine Rotationsfrequenz des Rotorsystems (102) bereitzustellen;
eine Steuereinheit (204), die konfiguriert ist, um Informationen von den Sensoren (202) und dem Tachometer zu empfangen und dem dedizierten Aktuator (212), dem integrierten Aktuator (208) und dem Zwischenaktuator (210) basierend auf den Informationen eine einheitliche Steuerung bereitzustellen; und
wobei der integrierte Aktuator (208) konfiguriert ist, um den Betrieb des Rotorsystems (102) auf der Grundlage von mindestens einem von der Rotationsfrequenz des Rotorsystems und der Vibration von dem Rotorsystem (102) zu beeinflussen, und;
wobei der Zwischenaktuator (201) mit der Pylonhalterung verbunden ist, um die Vibration in einem Lastpfad zwischen dem Rumpf (106) und dem Rotorsystem (102) zu beeinflussen;
wobei die Steuereinheit (204) weiter konfiguriert ist, um Befehlssignale an den dedizierten Aktuator (212) zu senden, wobei die Befehlssignale Antriebssignale für den Trägheitskraftgenerator umfassen, um die Masse (214) relativ zu dem Rumpf (106) zu bewegen, um Vibration und hörbare Geräusche zu reduzieren, die dem Cockpit und/oder der Kabine des Rumpfes zugeordnet sind.

2. Hubschrauber (100) nach Anspruch 1, wobei der Zwischenaktuator (210) in dem Lastpfad zwischen dem Rotorsystem (102) und dem Rumpf (106) angeordnet ist.

3. Verfahren, umfassend:
Betreiben einer ersten Vibrationsquelle eines Hubschraubers (100), wobei die erste Vibrationsquelle das Hauptrotorsystem (102) ist;
Erfassen von Vibration und hörbaren Geräuschen, die mindestens einem von dem Hauptrotorsystem (102), einer Kabine des Hubschraubers und einem Cockpit des Hubschraubers zugeordnet sind;
Betreiben einer einheitlichen Steuereinheit, um die erfasste Vibration und das hörbare Geräusch zu empfangen und um die Vibration und das hörbare Geräusch zu reduzieren, die mindestens einem von dem Hauptrotorsystem, der Kabine und dem Cockpit zugeordnet sind; und
Bereitstellen einer Rotationsfrequenz des Rotorsystems (102) an die einheitliche Steuereinheit (204) über einen Tachometer;
wobei das Betreiben der einheitlichen Steuereinheit die Steuerung jedes von einem dedizierten Aktuator (212), einem integrierten Aktuator (208) und einem Zwischenaktuator (210) umfasst, um Vibration und hörbare Geräusche zu reduzieren;
wobei der dedizierte Aktuator (212) mit dem Cockpit und/oder der Kabine des Rumpfes (106) verbunden ist, wobei der dedizierte Aktuator (212) eine Masse (214) und einen Trägheitskraftgenerator zum Bewegen der Masse (214) relativ zu dem Rumpf (106) umfasst, um dadurch eine lineare oder rotierende Kraft relativ zu dem Rumpf (106) zu erzeugen, und
wobei das Steuern des dedizierten Aktuators das Senden von Befehlssignalen an den dedizierten Aktuator (212) umfasst, wobei die Befehlssignale Antriebssignale für den Trägheitskraftgenerator umfassen, um die Masse relativ zu dem Rumpf (106) zu bewegen, um Vibration und hörbare Geräusche zu reduzieren, die dem Cockpit und/oder der Kabine des Rumpfes (106) zugeordnet sind;
und wobei der integrierte Aktuator (208) und der Zwischenaktuator (210) steuerbar mit der ersten Vibrationsquelle, die das Rotorsystem (102) ist, verbunden sind;
wobei das Steuern des integrierten Aktuators (208) das Beeinflussen des Betriebs des Rotorsystems auf der Grundlage der Rotationsfrequenz des Rotorsystems und/oder der durch das Rotorsystem erzeugten Vibration umfasst;
und
wobei das Steuern des Zwischenaktuators (210) das Beeinflussen von Vibration umfasst, die einer Pylonbefestigung in dem Lastpfad zugeordnet sind, die den Rumpf (106) und das Rotorsystem verbindet.

4. Verfahren nach Anspruch 3, wobei eine zweite Vibrationsquelle ein Drehmomentausgleichssystem (108) des Hubschraubers umfasst.

5. Hubschrauber nach Anspruch 1, wobei das Hauptrotorsystem (102) ein Kipprotorsystem ist.

6. Hubschrauber nach Anspruch 5, wobei mindestens einer der Sensoren des Vibrationssteuerungssystems (200) einen Beschleunigungsmesser oder einen Dehnungsmessstreifen umfasst.

7. Hubschrauber nach Anspruch 1, wobei die Steuereinheit (204) weiter konfiguriert ist, um Befehlssignale an den integrierten Aktuator (208) zu senden, wobei die Befehlssignale Steuersignale umfassen, um eines einzustellen von:
einem auf das Hauptrotorsystem aufgebrachten Drehmoment;
einem Anstellwinkel eines Rotorblatts;
einem Hinterkantenklappenwert; und
einer Taumelscheibe.

8. Verfahren nach Anspruch 3, weiter umfassend:
Senden von Befehlssignalen von der einheitlichen Steuereinheit an jeden integrierten Aktuator (208) und den Zwischenaktuator (210), wobei die Befehlssignale Steuersignale umfassen, um Vibration und hörbare Geräusche in Verbindung mit dem Cockpit und/oder der Kabine des Rumpfes zu reduzieren.

9. Verfahren nach Anspruch 3, wobei das Steuern des Zwischenaktuators (210) das aktive Verursachen von Vibration umfasst, um die Übertragung von Vibrationskräften zwischen dem Rotorsystem (102) und dem Rumpf (106) zu reduzieren.

10. Verfahren nach Anspruch 3, wobei das Steuern des integrierten Aktuators (208) das aktive Verursachen von Vibration umfasst, um die dem Rotorsystem (102) zugeordnete Vibration zu reduzieren.

## Revendications

1. Hélicoptère (100), présentant un système de contrôle de vibrations (200), et comprenant :
un fuselage (106) ;
une cabine ;
un cockpit ;
un système de rotor (102) principal ; et
un support de mât reliant le système de rotor (102) principal au fuselage ;
le système de contrôle de vibrations (200) comprenant :
un actionneur dédié (212) relié au cockpit et/ou à la cabine du fuselage (106), l'actionneur dédié (212) comprenant une masse (214) et un générateur de force d'inertie pour déplacer la masse (214) par rapport au fuselage (106) pour ainsi générer une force linéaire ou de rotation par rapport au fuselage (106) ;
au moins un parmi un actionneur intégré (208) et un actionneur intermédiaire (210), tous les deux reliés de manière commandable à une première source de vibration, la première source de vibration étant le système de rotor (102) ;
une pluralité de capteurs (202) configurés pour détecter une vibration et un bruit audible associés à au moins l'un parmi le système de rotor (102), la cabine et le cockpit ;
un tachymètre configuré pour fournir une fréquence de rotation du système de rotor (102) ;
un dispositif de commande (204) configuré pour recevoir des informations provenant des capteurs (202) et du tachymètre et, pour fournir une commande unifiée à l'actionneur dédié (212), à l'actionneur intégré (208), et à l'actionneur intermédiaire (210) sur la base des informations ; et
dans lequel l'actionneur intégré (208) est configuré pour affecter le fonctionnement du système de rotor (102) sur la base d'au moins l'une parmi la fréquence de rotation du système de rotor et la vibration provenant du système de rotor (102), et ;
dans lequel l'actionneur intermédiaire (201) est associé au support de mât pour affecter la vibration dans un trajet de charge entre le fuselage (106) et le système de rotor (102) ;
dans lequel le système de commande (204) est configuré en outre pour envoyer des signaux de commande à l'actionneur dédié (212), les signaux de commande comprenant des signaux d'excitation pour le générateur de force d'inertie pour déplacer la masse (214) par rapport au fuselage (106) afin de réduire une vibration et un bruit audible associés au cockpit et/ou à la cabine du fuselage.

2. Hélicoptère (100) selon la revendication 1, dans lequel l'actionneur intermédiaire (210) est disposé dans le trajet de charge entre le système de rotor (102) et le fuselage (106).

3. Procédé, comprenant :
la mise en fonctionnement d'une première source de vibration d'un hélicoptère (100), la première source de vibration étant le système de rotor (102) principal ;
la détection d'une vibration et d'un bruit audible associés à au moins l'un parmi le système de rotor (102) principal, une cabine de l'hélicoptère, et un cockpit de l'hélicoptère ;
la mise en fonctionnement d'un dispositif de commande unifié pour recevoir la vibration et le bruit audible détectés et pour réduire une vibration et un bruit audible associés à l'au moins un parmi le système de rotor principal, la cabine, et le cockpit ; et
la fourniture d'une fréquence de rotation du système de rotor (102) au dispositif de commande unifié (204) via un tachymètre ;
dans lequel la mise en fonctionnement du dispositif de commande unifié comprend la commande de chacun parmi un actionneur dédié (212), un actionneur intégré (208), et un actionneur intermédiaire (210) pour réduire une vibration et un bruit audible ;
dans lequel l'actionneur dédié (212) est relié au cockpit et/ou à la cabine du fuselage (106), l'actionneur dédié (212) comprenant une masse (214) et un générateur de force d'inertie pour déplacer la masse (214) par rapport au fuselage (106) pour ainsi générer une force linéaire ou de rotation par rapport au fuselage (106), et
dans lequel la commande de l'actionneur dédié comprend l'envoi de signaux de commande à l'actionneur dédié (212), les signaux de commande comprenant des signaux d'excitation pour le générateur de force d'inertie pour déplacer la masse par rapport au fuselage (106) afin de réduire une vibration et un bruit audible associés au cockpit et/ou à la cabine du fuselage (106) ;
et dans lequel l'actionneur intégré (208) et l'actionneur intermédiaire (210) sont reliés de manière commandable à la première source de vibration, qui est le système de rotor (102) ;
dans lequel la commande de l'actionneur intégré (208) comprend le fait d'affecter le fonctionnement du système de rotor sur la base d'au moins l'une parmi la fréquence de rotation du système de rotor et la vibration produite par le système de rotor ; et
dans lequel la commande de l'actionneur intermédiaire (210) comprend le fait d'affecter une vibration associée au support de mât dans le trajet de charge reliant le fuselage (106) et le système de rotor.

4. Procédé selon la revendication 3, dans lequel une seconde source de vibration comprend un système anticouple (108) de l'hélicoptère.

5. Hélicoptère selon la revendication 1, dans lequel le système de rotor (102) principal est un système de rotor basculant.

6. Hélicoptère selon la revendication 5, dans lequel au moins un des capteurs du système de contrôle de vibrations (200) comprend un accéléromètre ou un extensomètre.

7. Hélicoptère selon la revendication 1, dans lequel le dispositif de commande (204) est configuré en outre pour envoyer des signaux de commande à l'actionneur intégré (208), les signaux de commande comprenant des signaux de contrôle pour ajuster l'un parmi :
un couple appliqué au système de rotor principal ;
un pas d'une pale de rotor ;
une valeur de volet de bord de fuite ; et
un plateau cyclique.

8. Procédé selon la revendication 3, comprenant en outre :
l'envoi de signaux de commande à partir du dispositif de commande unifié à chacun parmi l'actionneur intégré (208) et l'actionneur intermédiaire (210), les signaux de commande comprenant des signaux de contrôle pour réduire une vibration et un bruit audible associés au cockpit et/ou à la cabine du fuselage.

9. Procédé selon la revendication 3, dans lequel la commande de l'actionneur intermédiaire (210) comprend le fait de provoquer activement une vibration pour réduire la transmission de forces vibratoires entre le système de rotor (102) et le fuselage (106).

10. Procédé selon la revendication 3, dans lequel la commande de l'actionneur intégré (208) comprend le fait de provoquer activement une vibration pour réduire une vibration associée au système de rotor (102).
